**Europäisches Patentamt**

**European Patent Office**

**Office européen des brevets**

(19)

(11) Numéro de publication: **0 040 162**
**A1**

(12) # DEMANDE DE BREVET EUROPEEN

(21) Numéro de dépôt: **81420068.9**

(22) Date de dépôt: **04.05.81**

(51) Int. Cl.³: **A 61 M 1/03**
**F 28 D 9/00, B 01 D 13/00**

(30) Priorité: **08.05.80 FR 8010667**

(43) Date de publication de la demande:
**18.11.81 Bulletin 81/46**

(84) Etats contractants désignés:
**BE CH DE GB IT LI NL SE**

(71) Demandeur: **SOCIETE DES INDUSTRIES PLASTIQUES - S.O.D.I.P.**
**7, avenue Lionel Terray**
**F-69330 Meyzieu(FR)**

(72) Inventeur: **Benattar, Robert**
**115, boulevard Yves Farges**
**F-69007 Lyon(FR)**

(72) Inventeur: **Cronenberger, Michel**
**Chassagny**
**F-69700 Givors(FR)**

(74) Mandataire: **Vogt, Bernard et al,**
**RHONE-POULENC INDUSTRIES Centre de Recherches des Carrières Service Brevets**
**F-69190 Saint-Fons(FR)**

(54) **Dispositif formant enveloppe pour un empilement, appareil comportant ledit dispositif et procédé de montage d'un tel appareil.**

(57) L'invention concerne un dispositif formant enveloppe pour un empilement d'éléments, un appareil comportant ledit dispositif et le procédé de montage dudit appareil.

Le dispositif comprend :

— deux plateaux (22, 24) entre lesquels est disposé l'empilement (26), les faces intérieures (21, 23) des plateaux (22, 24) étant au contact des faces de l'empilement (26) parallèles au plan des éléments.

— au moins deux plaques latérales (28, 30) placées devant au moins deux faces latérales (27, 29) de l'empilement (26), au moins une plaque latérale est reliée à au moins un plateau au moyen d'une liaison permanente, ladite liaison permanente étant de préférence constituée par au moins une zone de soudure (11).

Le dispositif peut être utilisé pour maintenir l'empilement d'éléments sensiblement plans et de membranes semi-perméables d'un appareil qui peut être utilisé dans le domaine médical.

FIG.3

# DISPOSITIF FORMANT ENVELOPPE POUR UN EMPILEMENT, APPAREIL COMPORTANT LEDIT DISPOSITIF ET PROCEDE DE MONTAGE D'UN TEL APPAREIL

La présente invention concerne un dispositif formant enveloppe destiné à maintenir un empilement d'éléments sous l'action d'un effort de compression prédéterminé. Elle concerne aussi un appareil dont l'empilement est maintenu sous l'action d'un effort de compression prédéterminé par un tel dispositif ainsi qu'un procédé de montage d'un tel appareil.

L'empilement peut être tel qu'il fasse partie d'appareils de traitement du sang comme les hémodialyseurs, les hémofiltres ou les oxygénateurs de sang, mais ce peut être aussi un empilement destiné à être utilisé dans des échangeurs de chaleur, des filtres à gaz ou des dispositifs de séparation ou d'échange en général. De tels empilements sont habituellement constitués d'éléments sensiblement plans, appelés ci-après "éléments". Les éléments peuvent être par exemple des feuilles de membranes semi-perméables ou des plaques relativement minces, ils peuvent également être des feuilles de membranes semi-perméables et leurs plaques-supports.

Dans un appareil comportant un tel empilement l'étanchéité est généralement réalisée en assurant l'étanchéité entre éléments. Ainsi pour un empilement constitué de feuilles de membranes semi-perméables et de plaques-supports, les plaques-supports comportent le plus souvent à leur périphérie une zone lisse qui peut éventuellement porter une ou plusieurs fines nervures, l'étanchéité est assurée au niveau des zones lisses lors du placement de l'empilement dans le dispositif destiné à maintenir l'empilement sous l'action d'un effort de compression. L'étanchéité est améliorée par écrasement des fines nervures. Ainsi il est nécessaire que le dispositif permette d'appliquer à l'empilement un effort de compression d'une valeur telle que l'effort de compression en résultant entre les divers éléments constituant l'empilement, notamment dans la zone lisse, soit suffisante pour assurer l'étanchéité entre les éléments sans que ceux-ci soient soumis à des contraintes trop importantes. Cette valeur de l'effort de compression est déterminée par essais en

laboratoire, elle est appelée dans le présent texte "effort de compression prédéterminé".

Le brevet français 71/40 890 décrit un appareil d'hémodialyse dont l'empilement de membranes et de plaques-supports est maintenu serré entre deux plateaux réunis par des rails de serrage sensiblement en forme de U montés le long des côtés longitudinaux des plateaux en s'engageant dans des rainures formées dans les deux plateaux le long de leurs bords latéraux.

Même si un tel appareil comporte un empilement qui est apparemment maintenu serré, l'effort de compression résultant entre les différents éléments n'est généralement pas égal à l'effort de compression qui a été déterminé comme nécessaire et suffisant pour assurer l'étanchéité entre les différents éléments .En effet aussi bien la hauteur de l'empilement (déterminée par la somme des épaisseurs des éléments) que la distance entre les faces intérieures des plateaux destinées à être en contact avec les faces de l'empilement parallèles au plan des éléments, cette distance étant conditionnée notamment par la distance entre les branches du U formé par le rail, peuvent varier légèrement de par leur procédé de fabrication par moulage par injection. Ainsi l'effort de compression peut varier d'un appareil à un autre, être trop faible, l'étanchéité n'est alors pas réalisée, ou être trop fort, les membranes risquent alors d'être détériorées. De plus un tel dispositif ne permet pas d'obtenir des passages pour le ou les fluides qui circulent au contact des membranes réguliers et minces et d'épaisseur égale à l'épaisseur optimum qui a été calculée pour les échanges entre fluides.

La présente invention a pour but un dispositif formant enveloppe qui permet de soumettre un empilement tel que décrit ci-avant à un effort de compression prédéterminé, qui a essentiellement pour rôle d'établir des passages d'écoulements réguliers et minces pour le ou les fluides qui circulent au contact des éléments et d'assurer l'étanchéité de l'empilement.

La présente invention a aussi pour but un dispositif formant enveloppe qui maintient des empilements différents sous l'action d'efforts de compression égaux d'un empilement à un autre.

La présente invention a également pour but un dispositif qui est de fabrication simple et économique et qui n'est pas sujet à un démontage intempestif.

Il a maintenant été trouvé un dispositif formant enveloppe pour un empilement d'éléments destiné à maintenir ledit empilement notamment sous l'action d'un effort de compression prédéterminé, ledit dispositif comprenant deux plateaux entre lesquels est disposé ledit empilement, les faces intérieures desdits plateaux étant au contact des faces de l'empilement sensiblement parallèles au plan des éléments, et au moins deux plaques latérales placées devant au moins deux faces latérales de l'empilement, caractérisé en ce que au moins une plaque latérale est reliée à au moins un plateau au moyen d'une liaison permanente.

On appellera, par la suite "face latérale" les faces de l'empilement qui sont sensiblement perpendiculaires aux plans des éléments. Les "faces latérales opposées" étant les faces latérales homologues de l'empilement, comme par exemple les deux faces latérales longitudinales d'un empilement parallélipipédique rectangle ou pour un empilement parallélipipédique de base trapézoïdale, c'est-à-dire constitué d'éléments trapézoïdaux, les "faces latérales opposées" peuvent être les faces latérales selon les bases desdits trapèzes ou les faces latérales selon les deux autres côtés desdits trapèzes.

On appellera, par la suite "bords latéraux des plateaux", les bords des plateaux qui correspondent aux faces latérales de l'empilement et "bords latéraux opposés des plateaux", les bords latéraux des plateaux qui correspondent à des faces latérales opposées de l'empilement.

Les bords des plaques latérales correspondant à des bords latéraux des plateaux désigneront les bords des plaques latérales sensiblement parallèles au plan des éléments.

Les plateaux et les plaques latérales peuvent être constitués de matériaux différents ou non, homogènes ou non, en particulier ils peuvent être armés, par exemple par une ossature métallique. Ils peuvent comprendre des éléments métalliques (par exemple en alliage d'aluminium ou acier) ou en matières thermoplastiques, telles que les polyoléfines, les polyamides, les résines acryliques, le polystyrène, leurs mélanges ou copolymères qui possèdent notamment de bonnes caractéristiques mécaniques, en particulier à la flexion et à la traction. On peut aussi employer des matières thermoplastiques additionnées de charges renforçantes (notamment l'amiante, le carbone et de préférence les fibres de verre).

Le dispositif selon l'invention formant enveloppe pour un empilement d'éléments est destiné à maintenir un empilement par exemple constitué de membranes semi-perméables et de plaques-supports, sous un effort de compression prédéterminé tel que l'effort de compression entre les divers éléments constituant l'empilement soit suffisant, d'une part pour assurer l'étanchéité entre deux éléments adjacents à leur périphérie, et que d'autre part les passages d'écoulement pour le ou les fluides qui circulent au contact des éléments, par exemple au contact des membranes soient à la fois réguliers et minces. Le dispositif comprend :

- deux plateaux entre lesquels est disposé l'empilement, les faces intérieures des plateaux, c'est-à-dire les faces des plateaux destinées à être situées à l'intérieur de l'appareil, étant au contact des faces de l'empilement sensiblement parallèles au plan des éléments,

- au moins deux plaques latérales placées devant au moins deux faces latérales de l'empilement,

- au moins une plaque latérale reliée à au moins un plateau au moyen d'une liaison permanente.

Par "liaison permanente" entre la plaque latérale et le plateau on désigne une liaison telle que la plaque latérale soit reliée au plateau de façon indémontable, celà n'exclut pas que la plaque latérale et le plateau puissent être séparés par rupture de la liaison permanente par exemple par découpage ou arrachage.

La liaison permanente peut être obtenue par collage, de préférence ladite liaison permanente est constituée par au moins une zone de soudure.

Le dispositif selon l'invention peut être tel que au moins une plaque latérale est articulée à un plateau et reliée par au moins une zone de soudure à l'autre plateau.

Le dispositif peut aussi être tel que au moins une plaque latérale est solidaire d'un plateau et reliée par au moins une zone de soudure à l'autre plateau.

De préférence au moins deux plaques latérales opposées sont solidaires du même plateau et sont reliées par au moins une zone de soudure à l'autre plateau.

De préférence encore chaque plaque latérale est reliée à chaque plateau au moyen d'une zone de soudure.

Selon un mode de réalisation la zone de soudure est formée entre la surface sensiblement perpendiculaire au plan des éléments située le long du bord latéral d'un plateau et la zone marginale située le long du bord correspondant de la plaque latérale, ladite zone marginale et/ou ladite surface étant pourvue d'au moins un bossage.

Selon un autre mode de réalisation ladite zone de soudure est constituée d'une pluralité de zones élémentaires de soudure, une zone élémentaire de soudure étant formée entre les faces latérales, sensiblement perpendiculaires au plan des éléments, d'un tenon qui coopère avec un évidement.

Selon ce mode de réalisation les évidements sont situés le long des bords latéraux des plateaux et les tenons sont situés le long des bords correspondants des plaques latérales, ou bien les tenons sont situés le long des bords latéraux des plateaux et les évidements sont situés le long des bords correspondants des plaques latérales.

Les tenons et les évidements sont réalisés de façon telle que les faces latérales opposées des tenons et des évidements coopérant sont perpendiculaires au plan de la face latérale de l'empilement devant laquelle est située la plaque latérale portant les tenons ou les évidements.

Il est bien entendu que les plateaux peuvent porter des tenons et/ou des évidements qui peuvent être réalisés sur une excroissance ou une pluralité d'excroissances situées le long des bords latéraux des plateaux par exemple sur la face extérieure des plateaux, c'est-à-dire la face du plateau qui n'est pas en contact avec l'empilement, ou sur la face des plateaux sensiblement perpendiculaire au plan des éléments, ou encore que les évidements peuvent être des creux débouchant à la fois sur la face extérieure des plateaux et sur la face des plateaux sensiblement perpendiculaire au plan des éléments ou peuvent être des cavités débouchant seulement sur cette dernière face.

Il est bien entendu également que la plaque latérale peut porter des tenons et/ou des évidements qui peuvent être réalisés sur une excroissance ou sur une pluralité d'excroissances situées le long des bords latéraux des plaques latérales sur leurs faces intérieures (c'est-à-dire sur la face des plaques latérales destinée à être située à l'intérieur de l'appareil), ou encore que les évidements peuvent être des trous ou des cavités situés dans l'épaisseur des plaques latérales (l'épaisseur étant comptée parallèlement au plan des éléments et perpendiculairement au bord des plaques latérales) et débouchant sur les faces intérieures des plaques latérales.

Par la suite, par simplification, on se réfèrera seulement aux "évidements" et "tenons" et aux "bords latéraux des plateaux" et "bords des plaques latérales".

Eventuellement les bords des plaques latérales correspondant aux bords latéraux des plateaux comportent des rebords recouvrant les zones de soudure.

Un seul ou les deux plateaux du dispositif selon l'invention peuvent comporter des moyens d'entrée et/ou de sortie pour le ou les fluides circulant au contact des éléments si l'entrée et/ou la sortie dudit ou desdits fluides se fait sensiblement perpendiculairement au plan des éléments.

L'entrée et/ou la sortie pour le ou les fluides circulant au contact des éléments peut aussi se faire sensiblement parallèlement au plan des éléments, des moyens d'entrée et/ou de sortie pour au moins un fluide, sont alors situés sur au moins une face latérale de l'empilement. Un tel empilement est avantageusement maintenu sous l'action d'un effort de compression à l'aide d'un dispositif selon l'invention dont au moins une plaque latérale comporte des moyens d'entrée et/ou de sortie d'au moins un fluide. Cette plaque latérale qui comporte les moyens d'entrée et/ou de sortie d'au moins un fluide est placée devant la face latérale de l'empilement, pourvue des moyens d'entrée et/ou de sortie d'au moins un fluide.

Avantageusement, sur la face intérieure d'une telle plaque latérale, chaque moyen d'entrée et/ou de sortie de fluide est entouré par au moins un logement.

Dans chaque logement on peut placer un garnissage d'étanchéité par exemple par injection d'un produit approprié après que l'empilêment ait été placé dans le dispositif selon l'invention. De préférence dans chaque logement est placé un joint, qui peut être obtenu par surmoulage ou être rapporté.

De préférence encore le ou lesdits joints sont en matériau élastique et sont maintenus pressés contre les faces latérales de l'empilement au moyen des plaques latérales.

Avantageusement, comme matériau élastique pour réaliser les joints, on peut utiliser du polychlorure de vinyle plastifié, ou encore des élastomères polyuréthannes ou silicones.

Les moyens d'entrée et/ou de sortie de fluide peuvent être entourés sur la face intérieure de la plaque latérale par un seul logement dans lequel est placé un joint qui avantageusement comporte une rainure ouverte vers la face latérale de l'empilement. De préférence dans cette rainure est placé un garnissage d'étanchéité. Ce garnissage d'étanchéité est mis en place par injection dans la rainure d'un produit approprié, après que l'empilement ait été placé dans le dispositif selon l'invention.

Les moyens d'entrée et/ou de sortie de fluide peuvent aussi par exemple, être entourés de deux logements et dans chaque logement est placé un joint. Les deux joints délimitent entre eux une rainure sur la face intérieure de la plaque latérale, de préférence dans cette rainure est placé un garnissage d'étanchéité, qui peut, comme ci-avant être mis en place par injection d'un produit approprié.

Comme produit approprié pour réaliser le garnissage d'étanchéité, on peut avantageusement utiliser des produits tels que les colles polyuréthannes, époxy ou encore silicones.

De préférence au moins deux plaques latérales du dispositif selon l'invention sont placées devant au moins deux faces latérales opposées de l'empilement. Il est bien entendu que le dispositif selon l'invention peut être tel que plusieurs plaques latérales peuvent être placées devant une seule face latérale de l'empilement et que une ou plusieurs plaques latérales peuvent être placées devant chaque face latérale de l'empilement.

Il a également été trouvé un appareil dont l'empilement d'éléments est maintenu notamment sous un effort de compression prédéterminé par un dispositif tel que décrit ci-avant.

Cet appareil peut comprendre un empilement qui comporte sur ses faces latérales des moyens d'entrée et/ou de sortie d'au moins un fluide. Avantageusement les plaques latérales du dispositif comportent des moyens d'entrée et/ou de sortie d'au moins un fluide. Dans un tel appareil les moyens d'entrée et/ou de sortie d'au moins un fluide situés sur les faces latérales de l'empilement sont entourés par le ou les joints situés sur la face intérieure des plaques latérales autour des moyens d'entrée et/ou de sortie de fluide prévus sur les plaques latérales, lesdits joints étant maintenus pressés contre les faces latérales de l'empilement au moyen des plaques latérales.

Si les plaques latérales ne comportent pas de joints dans les logements, le matériau de garnissage placé dans les logements vient au contact de la face latérale de l'empilement et entoure les moyens d'entrée et/ou de sortie situés sur la face latérale de l'empilement.

L'appareil selon l'invention peut comporter un empilement constitué de feuilles de membranes semi-perméables et de plaques-supports.

Un appareil selon l'invention comportant un dispositif, objet de l'invention dont chaque plaque latérale est reliée aux deux plateaux au moyen d'une zone de soudure peut être monté en effectuant les opérations ci-après :

- on confectionne un empilement d'éléments, par exemple de membranes semi-perméables et de plaques-supports,

- on place l'empilement ainsi obtenu entre les deux plateaux du dispositif, les faces de l'empilement parallèles au plan des éléments étant au contact des faces intérieures desdits plateaux,

- on place alors l'ensemble constitué par l'empilement et les deux plateaux entre les platines d'une presse,

- on applique sur l'ensemble, au moyen de la presse, l'effort de compression déterminé pour que l'effort de compression entre les divers éléments constituant l'empilement soit suffisant d'une part pour assurer l'étanchéité entre deux éléments adjacents à leur périphérie et que, d'autre part les passages d'écoulement pour le ou les fluides qui circulent au contact des éléments soient à la fois réguliers
et minces,

      - on relie chaque plaque latérale aux deux plateaux en
plaçant les plaques latérales devant les faces latérales de l'empilement
éventuellement en engageant les tenons dans les évidements
correspondants, et on soude chaque plaque latérale à chaque plateau par
exemple en appliquant sur la surface extérieure des plaques latérales au
voisinage des bords latéraux de celles-ci les électrodes d'un appareil de
soudage par ultrasons,

      - on relâche l'action de la presse.

    Si l'appareil est tel que les plaques latérales sont reliées aux
deux plateaux par collage, le procédé de montage dudit appareil est
analogue, cependant avant de placer les plaques latérales devant les
faces de l'empilement, on enduit de colle les surfaces sensiblement
perpendiculaires au plan des éléments situées le long des bords latéraux
des plateaux et/ou la zone marginale située le long du bord correspondant
de la plaque latérale. On n'effectue pas bien entendu d'opération de
soudage.

    Si l'appareil comporte un dispositif dont les plaques latérales
sont articulées à l'un des plateaux et reliées par au moins une zone de
soudure à l'autre plateau, après avoir appliqué, au moyen de la presse,
sur l'ensemble constitué par l'empilement et les deux plateaux, l'effort
de compression prédéterminé, avant de relâcher l'action de la presse on
relie chaque plaque latérale aux deux plateaux :

      - en réalisant l'articulation de chaque plaque latérale à
l'un des plateaux, en faisant pivoter ladite plaque latérale autour de
ladite articulation jusqu'à ce que le bord latéral de l'autre plateau
soit au contact du bord correspondant de ladite plaque latérale,

      - en soudant chaque plaque latérale à l'autre plateau par
exemple en appliquant sur la surface extérieure des plaques latérales au
voisinage des bords latéraux de celles-ci les électrodes d'un appareil de
soudage par ultrasons, après avoir éventuellement préalablement engagé
les tenons dans les évidements correspondants.

    Si l'appareil comporte un dispositif dont deux plaques latérales
opposées sont solidaires du même plateau et sont reliées par au moins une zone de soudure à l'autre plateau :

- on confectionne un empilement d'éléments par exemple de membranes semi-perméables et de plaques-supports,

- on place l'empilement ainsi obtenu sur l'un des plateaux du dispositif, une face de l'empilement parallèle au plan des éléments étant au contact de la face intérieure dudit plateau,

- on emboîte sur ledit empilement l'ensemble constitué par les deux plaques latérales solidaires de l'autre plateau, la face intérieure dudit autre plateau étant au contact de l'autre face de l'empilement parallèle au plan des éléments,

- on place alors l'ensemble constitué par l'empilement, les deux plateaux, les plaques latérales entre les platines d'une presse,

- on applique sur l'ensemble, au moyen de la presse, l'effort de compression déterminé pour que l'effort de compression entre les divers éléments constituant l'empilement soit suffisant d'une part pour assurer l'étanchéité entre deux éléments adjacents à leur périphérie et que, d'autre part les passages d'écoulement pour le ou les fluides qui circulent au contact des éléments soient à la fois réguliers et minces,

- on soude chaque plaque latérale au plateau par exemple en appliquant sur la surface extérieure des plaques latérales au voisinage des bords latéraux de celles-ci les électrodes d'un appareil de soudage par ultrasons après avoir éventuellement préalablement engagé les tenons dans les évidements correspondants,

- on relâche l'action de la presse.

Si l'appareil comporte un dispositif dont les plaques latérales comportent des moyens d'entrée et/ou de sortie d'au moins un fluide, on peut en outre, généralement après qu'ait cessé l'action de la presse, injecter dans le logement des plaques latérales, un produit d'étanchéité.

Si le dispositif comporte un ou des joints dans le ou les logements des plaques latérales, le procédé de montage de l'appareil est analogue au procédé décrit ci-avant ; cependant, avant de placer les plaques latérales on place le ou les joints dans le ou les logements prévus à cet effet. Avantageusement après que l'action de la presse ait cessé, on injecte un produit d'étanchéité approprié dans la rainure qui est soit prévue dans le joint, soit délimitée entre deux joints.

La compréhension de l'invention sera facilitée par la description des figures ci-jointes qui illustrent à titre d'exemple, schématiquement et sans échelle déterminée divers modes de réalisation d'appareil selon l'invention comportant divers modes de réalisation d'un dispositif objet de la présente invention, les plaques latérales desdits dispositifs comportant des moyens d'entrée et de sortie pour deux fluides circulant au contact des éléments.

- la figure 1 est une vue de dessus d'un appareil selon l'invention pourvu d'un dispositif selon un premier mode de réalisation.

- la figure 2 est une vue de côté de l'appareil selon la figure 1.

- la figure 3 est une vue en coupe par le plan III-III de l'appareil selon la figure 1.

- la figure 4 est une vue de la face intérieure d'une plaque latérale selon ce premier mode de réalisation.

- la figure 5 est une vue de détail en coupe par le plan III-III de la zone de soudure entre une plaque latérale et un plateau avant soudage.

- la figure 6 est une vue de détail en coupe par un plan VI-VI perpendiculaire à une face latérale de l'empilement, montrant un logement dans lequel est placé un joint dont la rainure est pourvue d'un garnissage d'étanchéité.

- la figure 7 est une vue de la face intérieure d'une plaque latérale selon un deuxième mode de réalisation du dispositif selon l'invention.

- la figure 8 est une vue d'un appareil selon l'invention pourvu d'un dispositif selon un deuxième mode de réalisation en coupe par un plan VIII-VIII perpendiculaire à une plaque latérale selon la figure 7 et perpendiculaire au plan des éléments.

- les figures 9a et 9b sont des vues de détail en coupe d'une zone élémentaire de soudure avant soudage (vue a) et après soudage (vue b).

- la figure 10 est une vue en coupe par un plan perpendiculaire aux éléments et aux plaques latérales d'un appareil selon l'invention pourvu d'un dispositif selon un troisième mode de réalisation.

- les figures 11a et 11b sont des vues de détail en coupe par un plan perpendiculaire aux éléments et aux plaques latérales de deux modes de réalisation de l'articulation d'une plaque latérale et d'un plateau selon un quatrième mode de réalisation du dispositif selon l'invention.

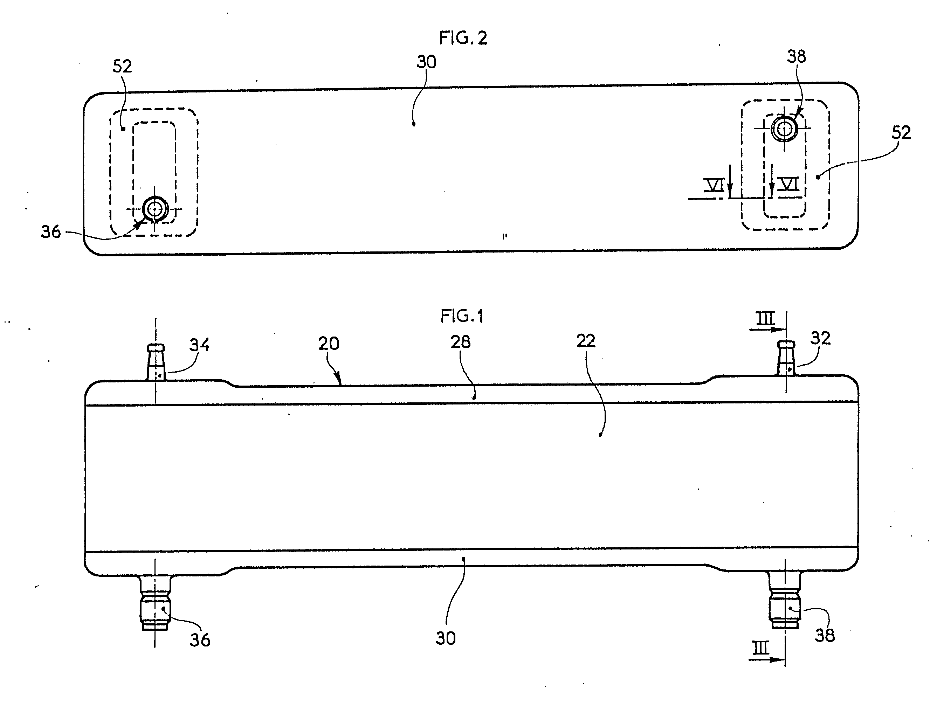

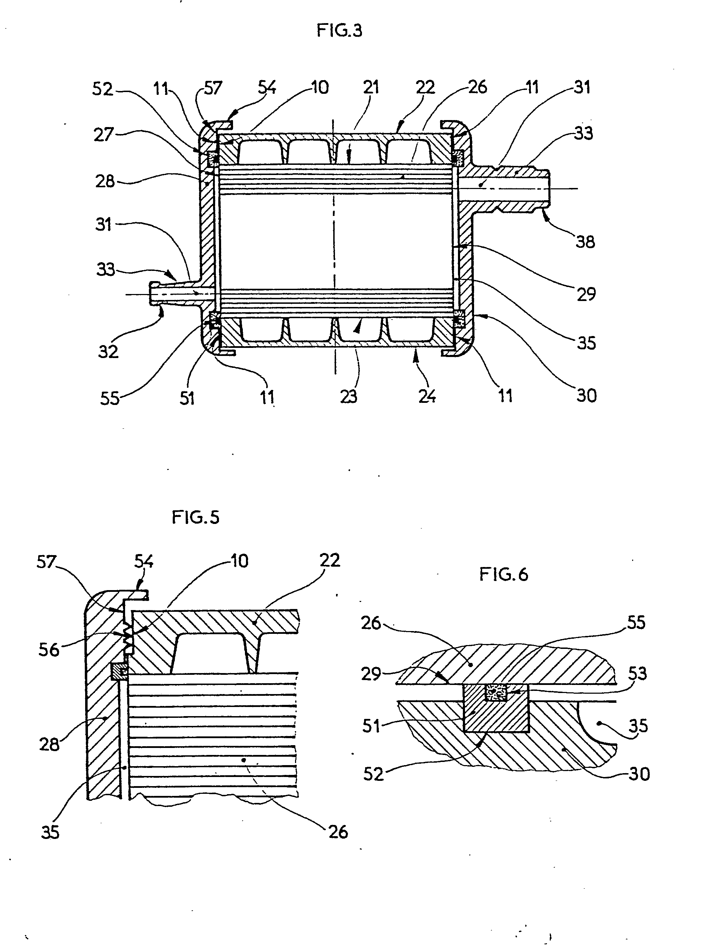

Le dispositif formant enveloppe (20) dont un premier mode de réalisation est représenté figures 1, 2 et 3 comporte deux plateaux (22) et (24) et deux plaques latérales (28) et (30) reliés par une liaison permanente. Le dispositif maintient l'empilement (26) sous l'action d'un effort de compression prédéterminé. Les plaques latérales (28) et (30) sont placées devant les faces latérales opposées (27) et (29) de l'empilement (26).

Le dispositif formant enveloppe (20) décrit à titre d'exemple, est destiné plus particulièrement à être utilisé pour un appareil d'échange entre deux fluides circulant respectivement de part et d'autre d'une membrane.

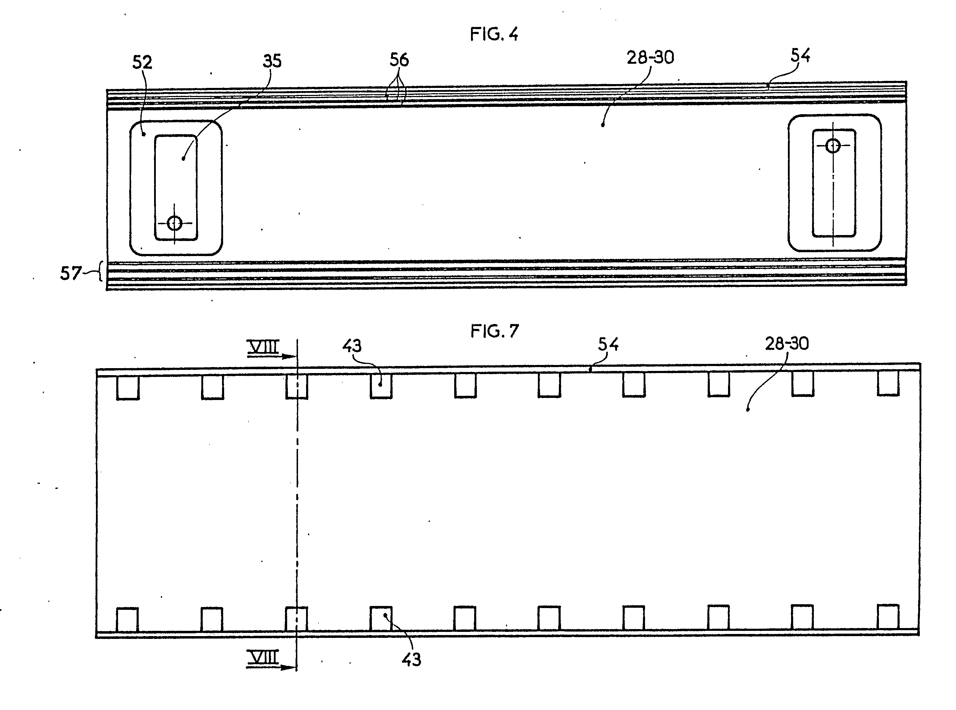

La plaque latérale (28) porte des moyens d'entrée (32) et des moyens de sortie (34) d'un premier fluide destinés à être reliés à des conduits d'alimentation et d'évacuation de ce premier fluide. La plaque latérale (30) porte des moyens d'entrée (36) et des moyens de sortie (38) d'un deuxième fluide destinés à être reliés à des conduits d'alimentation et d'évacuation de ce deuxième fluide. Le plus souvent, comme représenté, les moyens d'entrée et/ou de sortie de fluide sont constitués sur la plaque latérale d'un orifice (31) auquel sont associées vers l'extérieur de l'appareil, une tubulure (33) et, sur la face intérieure de la plaque latérale, une chambre de répartition (35). Egalement, sur la face intérieure de la plaque latérale (28, 30), représentée figure 4, on peut voir que les moyens d'entrée et/ou de sortie de fluide sont entourés par un logement (52). Dans le logement (52) est placé un joint (51) qui comporte une rainure (53) ouverte vers la face latérale (29) de l'empilement (26). Après que la liaison permanente ait été réalisée entre les plaques latérales (28, 30) et les plateaux (22, 24), dans la rainure (53), un garnissage d'étanchéité (55) est placé (voir détail, figure 6). Selon ce premier mode de réalisation chaque plaque latérale (28, 30) est reliée à chaque plateau (22, 24) au moyen d'une zone de soudure (11). La zone de soudure (11) d'une plaque latérale et d'un plateau est formée entre la surface (10) sensiblement perpendiculaire au plan des éléments située le long du bord latéral d'un plateau et la zone marginale (57) située le long du bord correspondant de la plaque latérale. Afin de faciliter la réalisation de la liaison permanente entre la plaque latérale et le plateau notamment par soudage et en particulier par soudage par ultrasons, les zones marginales (57) situées le long des bords latéraux des plaques latérales sur leur face intérieure sont pourvues d'au moins un bossage (56). La plaque latérale représentée figure 4 comporte trois bossages (56) en forme de nervure de section sensiblement triangulaire et sensiblement parallèle au plan des éléments. La figure 5 montre les positions relatives d'un plateau et d'une plaque latérale avant soudure.

Les bossages (56) au lieu d'être portés par les zones marginales (57) des bords latéraux des plaques latérales, peuvent être portés par les surfaces (10) des plateaux, sensiblement perpendiculaires au plan des éléments. Les bossages (56) ont été représentés figure 4 parallèles au plan des éléments ; ils peuvent bien sûr être perpendiculaires au plan des éléments ou encore inclinés.

Les zones marginales (57) des plaques latérales et les surfaces (10) des plateaux peuvent porter toutes deux des bossages, dans ce cas avantageusement les bossages des zones marginales (57) et les bossages des surfaces (10) ne sont pas de directions parallèles.

Les bords latéraux des plaques latérales peuvent éventuellement comporter des rebords (54) destinés à cacher, par recouvrement, la zone de soudure et à éviter qu'un objet lamellaire puisse s'engager inopinément entre la plaque latérale et le plateau et les séparer par un effet de levier.

Selon un deuxième mode de réalisation le dispositif selon l'invention est analogue au dispositif décrit ci-avant mais chaque plaque latérale est reliée à chaque plateau au moyen d'une zone de soudure constituée d'une pluralité de zones élémentaires de soudure formées entre les faces latérales opposées sensiblement perpendiculaires au plan des éléments d'un tenon qui coopère avec un évidement. Ce deuxième mode de réalisation va être décrit ci-après en se référant aux figures 7, 8 et 9.

Le dispositif formant enveloppe (20) selon ce deuxième mode de réalisation comporte deux plateaux (22) et (24) et deux plaques latérales (28) et (30) reliés par une liaison permanente formée d'une pluralité de zones de soudure.

Les plaques latérales (28) et (30) ont été représentées sans moyens d'entrée et/ou de sortie de fluides, elles peuvent bien sûr en comporter.

Une zone élémentaire de soudure est formée entre les faces latérales opposées (41, 42) d'un tenon (43) qui coopère avec un évidement (44 44'), les faces latérales (41, 42) étant sensiblement perpendiculaires au plan des éléments. Selon le mode de réalisation représenté, les évidements sont situés le long des bords latéraux des plateaux (22, 24) et les tenons sont situés le long des bords latéraux des plaques latérales (28, 30) sur la face intérieure de celles-ci. On ne sort pas du cadre de l'invention en réalisant un dispositif dans lequel les tenons sont situés le long des bords latéraux des plateaux et les évidements sont situés le long des bords latéraux correspondants des plaques latérales. De préférence les tenons et les évidements sont régulièrement répartis, mais leur répartition peut être plus dense dans des zones où les zones élémentaires de soudure sont plus particulièrement sollicitées.

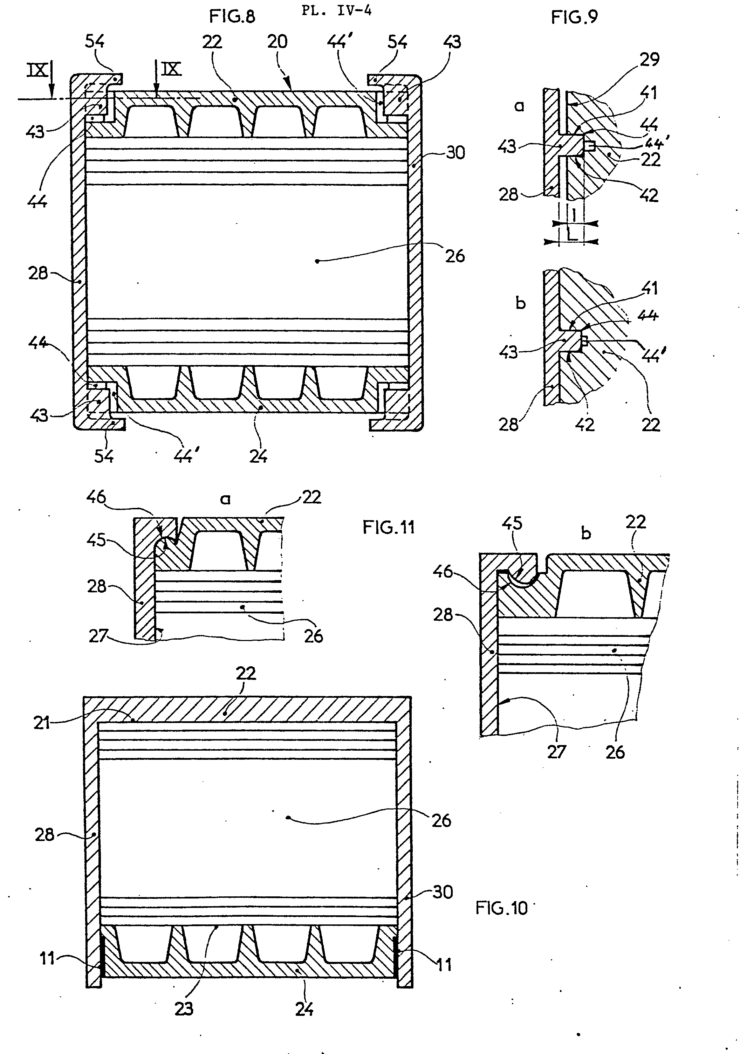

Les tenons (43) ont été représentés de forme sensiblement parallélipipédique rectangle. Les évidements comprennent avantageusement deux parties, une partie (44) suivie d'une partie (44') de largeur légèrement moindre (voir figure 9a). De préférence les parties (44) des évidements ont une profondeur $l$ inférieure à la longueur $L$ des tenons, $l$ et $L$ étant comptées perpendiculairement à la face latérale de l'empilement (voir figure 9a), ce qui permet de réaliser également la soudure entre les faces latérales des tenons (43) et des évidements (44) parallèles à la face latérale de l'empilement. Lors de l'opération de soudage les électrodes de l'appareil de soudage par ultrasons exercent simultanément un effort perpendiculaire à la surface extérieure des plaques latérales, ainsi les tenons pénètrent dans les évidements en repoussant la face située au fond de la partie (44) de l'évidement (voir figure 9b) et se soudent à cette dernière. Après soudage, la face intérieure de la plaque latérale peut être au contact de la face latérale (29) de l'empilement (26) devant laquelle elle est située.

Les tenons et les évidements ont été représentés de forme générale parallélipipédique, ils peuvent aussi présenter en coupe par un plan parallèle au plan des éléments une section de forme triangulaire ou de forme cylindrique.

Selon ce mode de réalisation, les bords latéraux des plaques latérales peuvent porter des rebords (54) comme les plaques latérales selon le premier mode de réalisation.

Les deux modes de réalisation du dispositif selon l'invention décrits ci-avant sont tels que chaque plaque latérale est reliée à chaque plateau au moyen d'une zone de soudure.

On ne sort pas du cadre de l'invention en réalisant un dispositif tel que au moins une plaque latérale est articulée à un plateau et reliée par au moins une zone de soudure à l'autre plateau. Deux variantes de réalisation de l'articulation d'une plaque latérale et d'un plateau sont représentées figures 11a et b. L'articulation de la plaque latérale (28) et du plateau (22) est constituée par une surface cylindrique convexe (45) qui coopère avec une surface cylindrique concave (46). Les deux surfaces cylindriques étant de directrice circulaire et de génératrice parallèle au plan des éléments. La surface cylindrique convexe (45) peut être située le long du bord latéral du plateau (22) et la surface cylindrique concave (46) peut être située le long du bord correspondant de la plaque latérale (28), comme représenté figure 11a. Ou bien la surface cylindrique concave (46) peut être située le long du bord latéral du plateau (22) et la surface cylindrique convexe (45) peut être située le long du bord correspondant de la plaque latérale (28), comme représenté figure 11b. Les surfaces cylindriques (45) et (46) peuvent être continues selon les bords latéraux du plateau et de la plaque latérale, elles peuvent aussi être discontinues.

La description ci-avant de l'articulation entre une plaque latérale et un plateau a été donnée à titre d'exemple, on peut bien sûr réaliser cette articulation selon les divers modes de réalisation décrits dans le brevet français n° 74/17 001.

On ne sort pas non plus du cadre de l'invention en réalisant un dispositif tel que au moins une plaque latérale est solidaire d'un plateau et reliée par au moins une zone de soudure à l'autre plateau. Un tel mode de réalisation est représenté figure 10, les plaques latérales (28) et (30) sont solidaires du plateau (22) et reliées par des zones de soudure (11) au plateau (24).

Les dispositifs formant enveloppe dont au moins une plaque latérale est articulée à un plateau ou solidaire d'un plateau, peuvent bien entendu comporter des moyens d'entrée et/ou de sortie de fluides.

Un appareil selon la présente invention comportant un dispositif formant enveloppe, également objet de l'invention, décrit ci-avant à titre d'exemple et représenté figures 1 à 6 peut être fabriqué en mettant en oeuvre le procédé décrit ci-après, en se référant auxdites figures.

On confectionne l'empilement (26) d'éléments, par exemple de membranes semi-perméables et de plaques-supports.

On place l'empilement (26) ainsi obtenu entre les deux plateaux (22, 24), les faces de l'empilement parallèles au plan des éléments étant au contact des faces intérieures (21, 23) desdits plateaux (22, 24).

On place l'ensemble, constitué par l'empilement (26) et les deux plateaux (22, 24) entre les platines d'une presse (non représentées), et on applique sur l'ensemble au moyen de la presse l'effort de compression déterminé pour que l'effort de compression entre les divers éléments constituant l'empilement soit suffisant d'une part pour assurer l'étanchéité entre deux éléments adjacents à leur périphérie et que, d'autre part, les passages d'écoulement pour le ou les fluides qui circulent au contact des éléments soient à la fois réguliers et minces.

Après avoir éventuellement mis en place les joints (51) dans des évidements (52) prévus sur les faces intérieures des plaques latérales (28, 30) on relie chaque plaque latérale (28, 30) aux deux plateaux (22, 24) en plaçant les plaques latérales devant les faces latérales (27, 29) de l'empilement (26), et en soudant chaque plaque latérale à chaque plateau par exemple en appliquant sur la surface extérieure des plaques latérales au voisinage des bords latéraux de celles-ci, les électrodes d'un appareil de soudage par ultrasons.

Si chaque plaque latérale est reliée aux deux plateaux par des zones de soudure constituées d'une pluralité de zones élémentaires de soudure formées entre les faces latérales sensiblement perpendiculaires au plan des éléments d'un tenon qui coopère avec un évidement, tel que représenté figures 7, 8 et 9, en plaçant les plaques latérales (28, 30) devant les faces latérales (27, 29) de l'empilement (26) on engage les tenons (43) dans les évidements (44).

On relâche l'action de la presse.

On injecte à l'aide d'une seringue, ou d'une buse d'injection automatique par un trou prévu à cet effet dans les plaques latérales, soit directement dans les logements, soit après avoir traversé le joint (51) dans la rainure (54) dudit joint, le produit approprié pour former le garnissage d'étanchéité (55).

L'appareil est alors prêt à être essayé, emballé, stérilisé afin d'être livré prêt à l'emploi par exemple en emballage stérile.

Un appareil selon la présente invention comportant un dispositif formant enveloppe également objet de l'invention dont les plaques latérales sont articulées à l'un des plateaux au moyen d'une articulation telle que représentée figures 11a et b peut être fabriqué en mettant en oeuvre un procédé analogue au procédé décrit ci-avant ; cependant après avoir appliqué au moyen de la presse sur l'ensemble constitué par l'empilement (26) et les deux plateaux (22, 24) l'effort de compression prédéterminé, on réalise l'articulation de chaque plaque latérale (28) à l'un des plateaux (22) en engageant la surface cylindrique convexe (45) dans la surface cylindrique concave (46), la coopération des deux surfaces cylindriques constituant l'articulation de la plaque latérale (28) et du plateau (22). On fait pivoter chaque plaque latérale (28) autour de ladite articulation jusqu'à ce que la face intérieure de la plaque latérale (28) soit pratiquement au contact de la face latérale (27) de l'empilement devant laquelle elle est placée. Le bord latéral de l'autre plateau est alors au contact du bord latéral correspondant de la plaque latérale, on applique sur la surface extérieure des plaques latérales, au voisinage des bords latéraux en contact avec ledit plateau les électrodes d'un appareil de soudage par ultrasons, on réalise la soudure et on relâche l'action de la presse.

Un appareil comportant un dispositif formant enveloppe dont deux plaques latérales sont solidaires d'un même plateau, tel que représenté figure 10 peut être fabriqué en mettant en oeuvre le procédé décrit ci-après.

On confectionne un empilement (26) d'éléments par exemple de membranes semi-perméables et de plaques-supports.

On place l'empilement (26) sur le plateau (24), du dispositif, la face (23) de l'empilement, parallèle au plan des éléments étant au contact de la face intérieure dudit plateau (24).

On emboîte sur l'empilement (26) l'ensemble constitué par les deux plaques latérales (28, 30) solidaires du plateau (22), la face intérieure du plateau (22) venant au contact de l'autre face (21) de l'empilement parallèle au plan des éléments.

On place l'ensemble constitué par l'empilement (26), les deux plateaux (22, 24), les deux plaques latérales (28, 30) entre les platines d'une presse et on applique sur l'ensemble l'effort de compression prédéterminé.

On soude chaque plaque latérale (28, 30) au plateau (24) en appliquant sur la surface extérieure des plaques latérales (28, 30) au voisinage des bords latéraux du plateau (24) les électrodes d'un appareil de soudage par ultrasons et on relâche l'action de la presse.

Le dispositif formant enveloppe, objet de l'invention, permet d'assurer un serrage de l'empilement tel que toute modification ultérieure du serrage initial de l'empilement d'éléments soit interdite. Ce serrage doit être suffisant et invariable pour que l'étanchéité de l'appareil soit obtenue dès le montage et se conserve longtemps, et pour que l'épaisseur des passages réservés aux fluides au contact des éléments soit et reste convenablement calibrée.

L'appareil selon l'invention est simple et économique à réaliser et il se prête à une fabrication en série.

Le serrage des empilements étant indéréglable, les appareils livrés sont de qualité constante.

De plus, comme l'appareil et notamment le dispositif formant enveloppe peuvent être construits sans aucune pièce métallique, ils sont facilement destructibles après usage, en particulier par incinération.

Les avantages liés au dispositif formant enveloppe, objet de l'invention, le rendent particulièrement intéressant pour la construction d'appareils utilisables dans le domaine médical, en particulier pour la construction d'appareils d'échanges mettant en oeuvre des membranes
semi-perméables.

REVENDICATIONS

1°) - Dispositif formant enveloppe pour un empilement d'éléments destiné à maintenir ledit empilement notamment sous l'action d'un effort de compression prédéterminé, ledit dispositif comprenant deux plateaux entre lesquels est disposé ledit empilement, les faces intérieures desdits plateaux étant au contact des faces de l'empilement sensiblement parallèles au plan des éléments, et au moins deux plaques latérales placées devant au moins deux faces latérales de l'empilement, caractérisé en ce que au moins une plaque latérale est reliée à au moins un plateau au moyen d'une liaison permanente.

2°) - Dispositif selon la revendication 1, caractérisé en ce que ladite liaison permanente est constituée par au moins une zone de soudure.

3°) - Dispositif selon la revendication 2, caractérisé en ce que au moins une plaque latérale est articulée à un plateau et reliée par au moins une zone de soudure à l'autre plateau.

4°) - Dispositif selon la revendication 2, caractérisé en ce que au moins une plaque latérale est solidaire d'un plateau et reliée par au moins une zone de soudure à l'autre plateau.

5°) - Dispositif selon la revendication 4, caractérisé en ce que au moins deux plaques latérales opposées sont solidaires du même plateau et sont reliées par au moins une zone de soudure à l'autre plateau.

6°) - Dispositif selon la revendication 2, caractérisé en ce que chaque plaque latérale est reliée à chaque plateau au moyen d'une zone de soudure.

7°) - Dispositif selon l'une quelconque des revendications 2 à 6, caractérisé en ce que la zone de soudure est formée entre la surface sensiblement perpendiculaire au plan des éléments située le long du bord latéral d'un plateau et la zone marginale située le long du bord correspondant de la plaque latérale, ladite zone marginale et/ou ladite surface étant pourvue d'au moins un bossage.

8°) - Dispositif selon l'une quelconque des revendications 2 à 6, caractérisé en ce que ladite zone de soudure est constituée d'une pluralité de zones élémentaires de soudure, une zone élémentaire de soudure étant formée entre les faces latérales, sensiblement perpendiculaires au plan des éléments, d'un tenon qui coopère avec un évidement.

9°) - Dispositif selon la revendication 8, caractérisé en ce que les évidements sont situés le long des bords latéraux des plateaux et les tenons sont situés le long des bords correspondants des plaques latérales .

10°) - Dispositif selon la revendication 8, caractérisé en ce que les tenons sont situés le long des bords latéraux des plateaux et les évidements sont situés le long des bords correspondants des plaques latérales.

11°) - Dispositif selon l'une quelconque des revendications 8 à 10, caractérisé en ce que les faces latérales opposées des tenons et des évidements coopérant sont perpendiculaires au plan de la face latérale de l'empilement devant laquelle est située la plaque latérale portant les tenons ou les évidements.

12°) - Dispositif selon l'une quelconque des revendications 1 à 3, 6 à 11 précédentes, caractérisé en ce que les bords des plaques latérales correspondant aux bords latéraux des plateaux comportent des rebords recouvrant les zones de soudure.

13°) - Dispositif selon l'une quelconque des revendications précédentes, caractérisé en ce que au moins une plaque latérale comporte des moyens d'entrée et/ou de sortie d'au moins un fluide.

14°) - Dispositif selon la revendication 13, caractérisé en ce que chaque moyen d'entrée et/ou de sortie de fluide est entouré sur la face intérieure de la plaque latérale, par au moins un logement.

15°) - Dispositif selon la revendication 14, caractérisé en ce que dans chaque logement est placé un garnissage d'étanchéité.

16°) - Dispositif selon la revendication 14, caractérisé en ce que, dans chaque logement, est placé un joint.

17°) - Dispositif selon la revendication 16, caractérisé en ce que le ou lesdits joints sont en matériau élastique et sont maintenus pressés contre les faces latérales de l'empilement au moyen des plaques latérales.

18°) - Dispositif selon l'une quelconque des revendications 14, 16 ou 17, caractérisé en ce que chaque moyen d'entrée et/ou de sortie est entouré d'un logement dans lequel est placé un joint qui comporte une

:

rainure ouverte vers la face latérale de l'empilement.

19°) - Dispositif selon l'une quelconque des revendications 14, 16 ou 17, caractérisé en ce que chaque moyen d'entrée et/ou de sortie est entouré de deux logements, et que dans chaque logement est placé un joint, lesdits joints délimitant entre eux une rainure.

20°) - Dispositif selon l'une quelconque des revendications 18 ou 19, caractérisé en ce que dans la rainure est placé un garnissage d'étanchéité.

21°) - Dispositif selon l'une quelconque des revendications précédentes, caractérisé en ce que, au moins deux plaques latérales sont placées devant au moins deux faces latérales opposées de l'empilement.

22°) - Appareil caractérisé en ce que l'empilement d'éléments dudit appareil est maintenu sous l'action d'un effort de compression prédéterminé par un dispositif selon l'une quelconque des revendications 1 à 21.

23°) - Appareil selon la revendication 22, caractérisé en ce que l'empilement dudit appareil comporte sur ses faces latérales des moyens d'entrée et/ou de sortie d'au moins un fluide.

24°) - Appareil selon la revendication 23, caractérisé en ce que les moyens d'entrée et/ou de sortie d'au moins un fluide, situés sur les faces latérales de l'empilement sont entourés par le ou les joints du dispositif selon la revendication 16, lesdits joints étant maintenus pressés contre les faces latérales de l'empilement au moyen des plaques latérales.

25°) - Appareil selon l'une quelconque des revendications 22 à 24, caractérisé en ce que ledit empilement est constitué de feuilles de membranes semi-perméables et de plaques-supports.

26°) - Procédé de montage d'un appareil selon l'une quelconque des revendications 22 à 25 ledit appareil comportant un dispositif formant enveloppe selon l'une quelconque des revendications 2, 6 à 21, caractérisé en ce qu'il comporte les opérations ci-après :

- on confectionne un empilement d'éléments, par exemple de membranes semi-perméables et de plaques-supports,

- on place l'empilement ainsi obtenu entre les deux plateaux du dispositif, les faces de l'empilement parallèles au plan des éléments étant au contact des faces intérieures desdits plateaux,

- on place alors l'ensemble constitué par l'empilement et les deux plateaux entre les platines d'une presse,

- on applique sur l'ensemble, au moyen de la presse, l'effort de compression déterminé pour que l'effort de compression entre les divers éléments constituant l'empilement soit suffisant d'une part pour assurer l'étanchéité entre deux éléments adjacents à leur périphérie et que, d'autre part les passages d'écoulement pour le ou les fluides qui circulent au contact des éléments soient à la fois réguliers et minces,

- on relie chaque plaque latérale aux deux plateaux en plaçant les plaques latérales devant les faces latérales de l'empilement éventuellement en engageant les tenons dans les évidements correspondants, et on soude chaque plaque latérale à chaque plateau par exemple en appliquant sur la surface extérieure des plaques latérales au voisinage des bords latéraux de celles-ci les électrodes d'un appareil de soudage par ultrasons,

- on relâche l'action de la presse.

27°) - Procédé de montage d'un appareil selon l'une quelconque des revendications 22 à 25 ledit appareil comportant un dispositif formant enveloppe selon l'une quelconque des revendications 2, 3, 7 à 21, caracactérisé en ce qu'il comporte les opérations ci-après :

- on confectionne un empilement d'éléments, par exemple de membranes semi-perméables et de plaques-supports,

- on place l'empilement ainsi obtenu entre les deux plateaux du dispositif, les faces de l'empilement parallèles au plan des éléments étant au contact des faces intérieures desdits plateaux,

- on place alors l'ensemble constitué par l'empilement et les deux plateaux entre les platines d'une presse,

- on applique sur l'ensemble, au moyen de la presse, l'effort de compression déterminé pour que l'effort de compression entre les divers éléments constituant l'empilement soit suffisant d'une part pour assurer l'étanchéité entre deux éléments adjacents à leur périphérie et que, d'autre part les passages d'écoulement pour le ou les fluides qui circulent au contact des éléments soient à la fois réguliers et minces,

- on relie chaque plaque latérale aux deux plateaux :

- en réalisant l'articulation de chaque plaque latérale à l'un des plateaux, en faisant pivoter ladite plaque latérale autour de ladite articulation jusqu'à ce que le bord latéral de l'autre plateau soit au contact du bord correspondant de ladite plaque latérale,

- en soudant chaque plaque latérale à l'autre plateau par exemple en appliquant sur la surface extérieure des plaques latérales au voisinage des bords latéraux de celles-ci les électrodes d'un appareil de soudage par ultrasons, après avoir éventuellement préalablement engagé les tenons dans les évidements correspondants.

- on relâche l'action de la presse.

28°) - Procédé de montage d'un appareil selon l'une quelconque des revendications 22 à 25, ledit appareil comportant un dispositif selon l'une quelconque des revendications 2, 4, 5, 7 à 21, caractérisé en ce qu'il comporte les opérations ci-après :

- on confectionne un empilement d'éléments par exemple de membranes semi-perméables et de plaques-supports,

- on place l'empilement ainsi obtenu sur l'un des plateaux du dispositif, une face de l'empilement parallèle au plan des éléments étant au contact de la face intérieure dudit plateau,

- on emboîte sur ledit empilement l'ensemble constitué par les deux plaques latérales solidaires de l'autre plateau, la face intérieure dudit autre plateau étant au contact de l'autre face de l'empilement parallèle au plan des éléments,

- on place alors l'ensemble constitué par l'empilement, les deux plateaux, les plaques latérales entre les platines d'une presse,

- on applique sur l'ensemble, au moyen de la presse, l'effort de compression déterminé pour que l'effort de compression entre les divers éléments constituant l'empilement soit suffisant d'une part pour assurer l'étanchéité entre deux éléments adjacents à leur périphérie et que, d'autre part les passages d'écoulement pour le ou les fluides qui circulent au contact des éléments soient à la fois réguliers et minces,

- on soude chaque plaque latérale au plateau par exemple en appliquant sur la surface extérieure des plaques latérales au voisinage des bords latéraux de celles-ci les électrodes d'un appareil de soudage par ultrasons après avoir éventuellement préalablement engagé les tenons dans les évidements correspondants,

     - on relâche l'action de la presse.

29°) - Procédé de montage d'un appareil à membrane selon la revendication 22 qui comporte un dispositif selon la revendication 15, caractérisé en ce qu'il comporte les opérations selon l'une quelconque des revendications 26 à 28 et que, en outre, on injecte dans les logements des plaques latérales un produit d'étanchéité approprié.

30°) - Procédé de montage d'un appareil à membrane selon la revendication 22 qui comporte un dispositif selon l'une des revendications 18 ou 19, caractérisé en ce qu'il comporte les opérations selon l'une quelconque des revendications 26 à 28 et que, en outre, avant de placer les plaques latérales on place dans les logements des joints et que après avoir relâché l'action de la presse on injecte dans les rainures prévues dans les joints ou délimitées entre deux joints, un garnissage d'étanchéité.

FIG. 2

FIG. 1

PL. I-4

0040162

PL. II-4

FIG.3

FIG.5

FIG.6

**FIG. 4**

**FIG. 7**

FIG.8   PL. IV-4   FIG.9

FIG.11

FIG.10

**0040162**
Numéro de la demande

Office européen des brevets

**RAPPORT DE RECHERCHE EUROPEENNE**

EP 81 42 0068

| | **DOCUMENTS CONSIDERES COMME PERTINENTS** | | CLASSEMENT DE LA DEMANDE (Int. Cl.³) |
|---|---|---|---|
| Catégorie | Citation du document avec indication, en cas de besoin, des parties pertinentes | Revendication concernée | |
| X | FR - A - 2 275 235 (BAXTER LAB INC) <br> * Page 2, ligne 26 - page 3, ligne 8; figures 1-4 * | 1,8-17, 22,23, 25 | A 61 M 1/03 <br> F 28 D 9/00 <br> B 01 D 13/00 |
| | -- | | |
| X | DE - A - 2 521 977 (RHONE-POULENC) <br> * L'ensemble du document * <br> & FR - A - 2 270 917 <br> & FR - A - 2 306 012 | 1-30 | |
| | -- | | |
| X | FR - A - 2 402 461 (GAMBRO AG) <br> * Les figures; page 2, lignes 5-25; page 4, lignes 1-31 * | 1-6 | **DOMAINES TECHNIQUES RECHERCHES (Int. Cl.³)** <br><br> A 61 M |
| | -- | | |
| X | FR - A - 2 402 462 (GAMBRO AG) <br> * Page 4, lignes 1-19 * | 1-6 | |
| | -- | | |
| X | FR - A - 2 382 899 (M. BRAMSON) <br> * Figures 23-29; page 21, ligne 36 - page 22, ligne 20 * | 1,8-17, 23 | |
| | -- | | **CATÉGORIE DES DOCUMENTS CITES** |
| X | FR - A - 2 440 196 (E.FRESENIUS) <br> * Page 4, lignes 31-38 * | 1-6 | X: particulièrement pertinent <br> A: arrière-plan technologique <br> O: divulgation non-écrite <br> P: document intercalaire |
| | -- | | T: théorie ou principe à la base de l'invention |
| X | FR - A - 2 294 731 (RHONE-POULENC) <br> * L'ensemble du document * | 1-30 | E: demande faisant interférence <br> D: document cité dans la demande |
| | -- | | L: document cité pour d'autres raisons |
| | ./. | | |
| | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 13-08-1981 | VEREECKE |

OEB Form 1503.1   06.78

**RAPPORT DE RECHERCHE EUROPEENNE**

Office européen
des brevets

EP 81 42 0068
-2-

| Catégorie | Citation du document avec indication, en cas de besoin, des parties pertinentes | Revendication concernée |
|---|---|---|
| | FR - A - 2 323 425 (GAMBRO AG)  <br> * Page 5, ligne 19 - page 6, ligne 25 * | 1-6 |
| | -- | |
| | FR - A - 2 323 426 (GAMBRO AG)  <br> * Page 5, lignes 21-36 * | 1-6 |
| | -- | |
| | FR - A - 2 243 703 (P. JOHANSSON)  <br> * Page 6, lignes 2-30 * | 26-30 |
| | -- | |
| | US - A - 3 864 265 (F. MARKLEY)  <br> * Colonne 6, lignes 5-13 * | 1-6 |
| | -- | |
| | FR - A - 1 540 667 (D. ROSS et al.)  <br> * Page 3, colonne de droite, ligne 24 - page 4, colonne de gauche, ligne 1 * | 14-20 |
| | -- | |
| | US - A - 3 483 867 (M. MARKOVITZ)  <br> * Colonne 3, lignes 16-74 * | 14-20 |
| | -- | |
| | FR - A - 2 243 715 (P. JOHANSSON)  <br> * Page 4, lignes 2-27 * | 26-30 |
| | -- | |
| P | EP - A - 0 023 188 (S.O.D.I.P.)  <br> * Les figures; page 11, lignes 26-33 * | 1,2,8-30 |
| P | & FR - A - 2 461 885 | |

**DOCUMENTS CONSIDERES COMME PERTINENTS**

CLASSEMENT DE LA DEMANDE (Int. Cl. ³)

DOMAINES TECHNIQUES RECHERCHES (Int. Cl. ³)

OEB Form 1503.2   06.78